# EUROPÄISCHE PATENTANMELDUNG

(11) **EP 1 666 189 A1**
(43) Veröffentlichungstag der Anmeldung: **07.06.2006**
(21) Anmeldenummer: 05010293.8
(22) Anmeldetag: 12.05.2005
(51) Int. Cl.: B23K 26/08, B23K 26/10, B23K 26/38, G02B 26/10

(54) **Einrichtung zur Führung eines Laserstrahles mit zwei Schwenkspiegeln und einem Stellelement zum Drehen um eine vertikale Achse ; Vorrichtung zur Laserbearbeitung mit einer solchen Einrichtung ; Verfahren zum Führen eines Laserstrahles mit Drehung um eine vertikale Achse**

(30) Priorität: 03.12.2004 DE 102004058263
(71) Anmelder: REHAU AG + Co, 95111 Rehau (DE)
(72) Erfinder: Stein, Helmut, 95028 Hof (DE)

(57) **Zusammenfassung**

Die Erfindung betrifft eine Einrichtung zur Führung eines Laserstrahles (S), mit wenigstens zwei Schwenkspiegeln (1,2), die zur Umlenkung des Strahles (S) angeordnet sind. Eine flexible Strahlführung wird dadurch erreicht, dass die wenigstens zwei Schwenkspiegel (1,2) um eine vertikale Achse (V) drehbar angeordnet sind.

## Beschreibung

Die Erfindung bezieht sich auf eine Einrichtung zur Führung eines Strahles, insbesondere eines Laserstrahles, auf eine Vorrichtung zur optischen Bearbeitung, insbesondere zur Laserbearbeitung und auf ein Verfahren zum Führen eines Strahles, insbesondere eines Laserstrahles.

Eine Einrichtung zur Führung eines Strahles, insbesondere eines Laserstrahles, mit wenigstens zwei Schwenkspiegeln, die zur Umlenkung des Strahles angeordnet sind, ist bekannt.

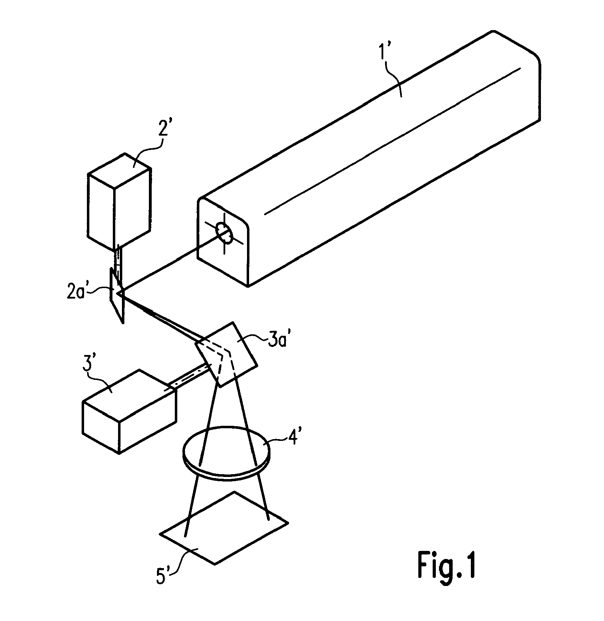

Diese Einrichtung wird beispielsweise als Scannereinheit in marktüblichen Laserbearbeitungsmaschinen verwendet. Ein Beispiel für eine solche bekannte Scannereinheit ist in Fig. 1 dargestellt.

Die Scannereinheit ist einer Laserquelle 1' nachgeordnet und umfasst einen ersten Scanner 2' mit einem Schwenkspiegel 2a' und einen zweiten Scanner 3', der ebenfalls einen Schwenkspiegel 3a' aufweist. Dem zweiten Scanner 3' ist ein Planfeldobjektiv 4' nachgeordnet, das zu einer Korrektur der Fokuslage der gezeigten Laseranordnung verwendet wird. Mit der gezeigten Scannereinheit wird der von der Laserquelle 1' emittierte Laserstrahl umgelenkt und durch entsprechende Ansteuerung der beiden Schwenkspiegel 2a', 3a' über ein Werkstück 5' zu dessen Bearbeitung geführt.

Bei dieser bekannten Scannereinheit wird der Laserstrahl über eine zweiachsige Spiegelumlenkung geführt, wodurch eine im Wesentlichen zweidimensionale Bewegung des Laserbrennfleckes möglich wird. Zum Schneiden von Bohrungen in dem Werkstück 5' geht der Laserstrahl von einem im Bohrungsmittelpunkt angeordneten Zentrum aus und wird, vergleichbar einem Pendel, zum Schneiden richtungsgeschwenkt.

Die auf diese Weise hergestellten Bohrungen weisen eine nicht zu vermeidende Konizität auf. Ferner liegt der Laserbrennfleck aufgrund der vorstehend erläuterten Strahlführung auf dem Ausschnitt einer Kugeloberfläche, so dass eine plane Fläche deshalb theoretisch nur an einem Punkt den idealen Abstand zur Optik aufweist. Dadurch wird eine optimale Fokussierung des Laserstrahles verhindert. Durch Verwendung von Planfeldoptiken kann eine gewisse Korrektur der Fokusverschiebung erfolgen, da der Laserstrahl je nach Auftreffort auf der Linse des Planfeldobjektives 4' unterschiedlich fokussiert wird. Solche Planfeldoptiken erlauben aber nur eine begrenzte Korrektur der Fokuslage und sind überdies teuer. Eine weitere Möglichkeit zur Anpassung der Fokuslage kann durch Vorsehen einer zusätzlichen, verschiebbaren Linse in Strahlrichtung erreicht werden, wobei mit einer derartigen verschiebbaren Linse lediglich eine geringfügige Verstellung des Laserbrennfleckes möglich ist.

Der Erfindung liegt daher die Aufgabe zugrunde, eine Einrichtung zur Führung eines Strahles, insbesondere eines Laserstrahles anzugeben, mit der die Herstellung von Bohrungen ermöglicht wird, die eine geringe oder keine Konizität aufweisen. Überdies soll mit dieser Einrichtung zur Führung eines Strahles die Bohrungskante beispielsweise zur Erzeugung einer Fase oder zur Verrundung der Kante bearbeitbar sein. Der Erfindung liegt ferner die Aufgabe zugrunde, eine Vorrichtung zur optischen Bearbeitung, insbesondere zur Laserbearbeitung sowie ein Verfahren zum Führen eines Strahles, insbesondere eines Laserstrahles anzugeben.

Erfindungsgemäß wir diese Aufgabe im Hinblick auf die Einrichtung zur Führung eines Strahles durch den Gegenstand des Anspruchs 1 gelöst. Hinsichtlich der Vorrichtung zur optischen Bearbeitung wird diese Aufgabe durch den Gegenstand des Anspruchs 12 und hinsichtlich des Verfahrens zum Führen eines Strahles durch den Gegenstand des Anspruchs 13 gelöst.

Die Erfindung hat den Vorteil, dass die zum Schneiden von Bohrungen erforderliche rotative Strahlführung durch eine Drehung der Schwenkspiegel um eine vertikale Achse erfolgt. Dadurch wird erreicht, dass zumindest die rotative Strahlführung unabhängig von einer Schwenkbewegung der Schwenkspiegel erfolgt, so dass die im Stand der Technik erforderliche Pendelbewegung des Laserstrahles, die maßgeblich für die Konizität der Bohrungen verantwortlich ist, bei der Herstellung von Bohrungen entfällt.

Da die beim Bohren durchgeführte Drehbewegung des Laserstrahles von den Schwenkbewegungen der Schwenkspiegel abgekoppelt ist, können die Schwenkspiegel zur Einstellung des Einfallwinkels des Laserstrahles bezogen auf das Werkstück verwendet werden. Das bedeutet, dass durch eine entsprechende Neigungseinstellung wenigstens eines der Schwenkspiegel ein bezogen auf eine Werkstückebene senkrecht einfallender Laserstrahl auf das Werkstück gelenkt werden kann, so dass rechtwinklige oder nahezu rechtwinklige Bohrungen, d.h. Bohrungen mit einer optimierten Zylinderinnenfläche hergestellt werden können.

Es ist mit der erfindungsgemäßen Einrichtung aber auch möglich, Bohrungen mit einer definierten Konizität herzustellen.

Weiterhin gestattet es die erfindungsgemäßen Einrichtung, Schrägbohrungen in Oberflächen einzubringen.

Die erfindungsgemäße Einrichtung hat ferner den Vorteil, dass durch die flexible Strahlführung eine gezielte Bearbeitung der Bohrungskanten ermöglicht wird.

Beispielsweise können Fasen an der jeweiligen Bohrungskante mittels des Laserstrahles ausgebildet werden. Dazu wird der Laserstrahl mit einem dem gewünschten Fasenwinkel entsprechenden Neigungswinkel durch die um die vertikale Achse drehbare Anordnung der Schwenkspiegel entlang der Bohrungskante geführt, wobei die vertikale Achse, um die die Schwenkspiegel gedreht werden, so angeordnet wird, dass diese mit der Bohrungsmittelachse fluchtet.

Außerdem ist es möglich, die Kanten der Bohrungen durch geeignete Führung des Laserstrahles zu verrunden, so dass eine sogenannte Radiusanformung erfolgt. Dabei wird der Laserstrahl entlang der Bohrungskante geführt, wobei der Drehbewegung eine beispielsweise in radialer Richtung erfolgende lineare Bewegung des Laserstrahles durch entsprechende Ansteuerung der Schwenkspiegel überlagert wird, wodurch eine Verrundung der Bohrungskanten ermöglicht wird.

Die Erfindung gestattet ferner die Bearbeitung nicht nur kreisförmiger Kanten, sondern beliebig geformter Kanten, da die um die vertikale Achse drehbare Anordnung der Schwenkspiegel zusammen mit der Schwenkbarkeit der Schwenkspiegel eine dafür geeignete flexible Strahlführung durch Überlagerung verschiedener Bewegungskomponenten schafft.

Vorzugsweise sind die wenigstens zwei Schwenkspiegel entlang der vertikalen Achse bewegbar. Durch diese Vertikalbewegung der Schwenkspiegel kann eine optimale Fokussierung des Laserstrahles für jeden Ort im Arbeitsbereich realisiert werden. Außerdem erlaubt die Bewegbarkeit der Schwenkspiegel entlang der vertikalen Achse eine dreidimensionale Anpassung der Fokuslage an entsprechend räumlich geformte Werkstücke, so dass eine räumliche Laserbearbeitung mit Scannertechnik möglich wird. Beispielsweise können mit dieser bevorzugten Ausführungsform Schweißungen in tiefen Sicken in Simultanschweißverfahren im gesamten Arbeitsbereich durchgeführt werden.

Die Bewegbarkeit der beiden Schwenkspiegel entlang der vertikalen Achse erlaubt ferner den Verzicht auf zusätzliche Optiken, wodurch die Kosten der Vorrichtung gesenkt werden.

In einer weiteren bevorzugten Ausführungsform der Erfindung ist der Abstand zwischen den wenigstens zwei Schwenkspiegeln veränderbar. Dadurch kann beispielsweise der Radius der herzustellenden Bohrungen beliebig und unabhängig von der Winkelstellung der Schwenkspiegel eingestellt werden. Ferner gestattet diese Ausführungsform eine noch flexiblere Strahlführung durch die erweiterten Kombinationsmöglichkeiten, die die Veränderlichkeit des Spiegelabstands im Zusammenhang mit der Drehanordnung und der Schwenkbarkeit der Schwenkspiegel mit sich bringt.

Vorzugsweise sind die wenigstens zwei Schwenkspiegel in horizontaler Gegenüberstellung angeordnet, wodurch eine besonders günstige Geometrie der Einrichtung im Hinblick auf eine optimale Strahlumlenkung erreicht wird.

In einer weiteren bevorzugten Ausführungsform der Erfindung schneidet die Schwenkachse eines der wenigstens zwei Schwenkspiegel die vertikale Achse unter einem Winkel von 90°. Auf diese Weise ist der Drehmittelpunkt der mit der Einrichtung erzielbaren Drehbewegung des Laserstrahles genau definiert, wodurch eine Steuerung der Laserstrahlführung erleichtert wird. Ferner können die Schwenkachsen der wenigstens zwei Schwenkspiegel parallel angeordnet sein, was ebenfalls die Steuerung der Strahlführung vereinfacht.

In einer bevorzugten Ausführungsform der Erfindung sind die Winkelstellungen der wenigstens zwei Schwenkspiegel veränderbar, insbesondere kontinuierlich veränderbar. Diese Ausgestaltung der Erfindung ist besonders gut für die Bearbeitung von Bohrungskanten geeignet, da die gleichzeitige Durchführung der Schwenkbewegung der einzelnen Schwenkspiegel mit der Drehbewegung der beiden Schwenkspiegel um die vertikale Achse eine für die Kantenbearbeitung optimale Strahlführung ermöglicht.

Die wenigstens zwei Schwenkspiegel können mechanisch verbunden sein, wodurch eine einfach handhabbare und steuerbare Scannereinheit geschaffen wird, da nur eine Steuerung bzw. nur ein Antrieb für die Drehbewegung der beiden Schwenkspiegel um die vertikale Achse erforderlich ist.

Dabei kann einer der wenigstens zwei Schwenkspiegel mit einem ersten Stellelement zur Erzeugung der Drehbewegung um die vertikale Achse verbunden sein. Dadurch wird auf besonders einfache Weise die Drehbewegung realisiert. Ferner kann das erste Stellelement zur Erzeugung der linearen Bewegung entlang der vertikalen Achse vorgesehen sein. Das bedeutet, dass das erste Stellelement sowohl die Drehbewegung als auch die Bewegung entlang der vertikalen Achse der beiden Schwenkspiegel erzeugt, wodurch eine sehr kompakte Bauweise ermöglicht wird. Durch die mechanische Verbindung zwischen den Schwenkspiegeln wird die durch das erste Stellelement eingeleitete rotative bzw. lineare Bewegung auf beide Schwenkspiegel übertragen, die dadurch synchron bewegbar sind.

In einer weiteren bevorzugten Ausführungsform sind die wenigstens zwei Schwenkspiegel durch ein zweites Stellelement zur Erzeugung einer weiteren linearen Bewegung verbunden. Dadurch kann auf einfache Weise der Abstand zwischen den beiden Schwenkspiegeln verändert werden, wobei das zweite Stellelement gleichzeitig die beiden Schwenkspiegel mechanisch verbindet.

Es kann weiterhin erfindungsgemäß vorgesehen sein, dass eine Exzenterführung zur Herstellung von Bohrungen insbesondere sehr kleinen Durchmessers genutzt wird, wobei die vertikale Achse exzentrisch um den Bohrungsmittelpunkt geführt wird.

Weitere vorteilhafte Ausführungsformen der Erfindung sind in den Unteransprüchen angegeben.

Die Erfindung wird im Folgenden anhand schematischer Zeichnungen beispielhaft und mit weiteren Einzelheiten erläutert. Dabei zeigen
- Fig. 1: eine Laserbearbeitungsmaschine mit Scannereinheit nach dem Stand der Technik,
- Fig. 2: eine Seitenansicht eines Ausführungsbeispiels der erfindungsgemäßen Einrichtung zur Führung eines Strahles und
- Fig. 3: eine perspektivische Ansicht der Einrichtung nach Fig. 2.

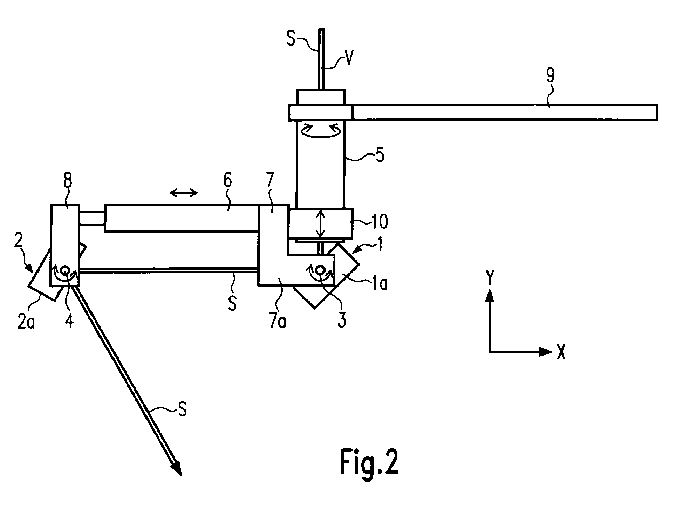

In Fig. 2 ist eine Einrichtung zur Führung eines Laserstrahles nach einem erfindungsgemäßen Ausführungsbeispiel mit den wichtigsten Bauteilen in schematischer Weise dargestellt. Diese Strahlführungseinrichtung kann in einer Laserbearbeitungsmaschine, insbesondere in einer Laserschneidmaschine verwendet werden. Andere Anwendungsmöglichkeiten, beispielsweise in einer Laserschweißmaschine sind ebenfalls denkbar.

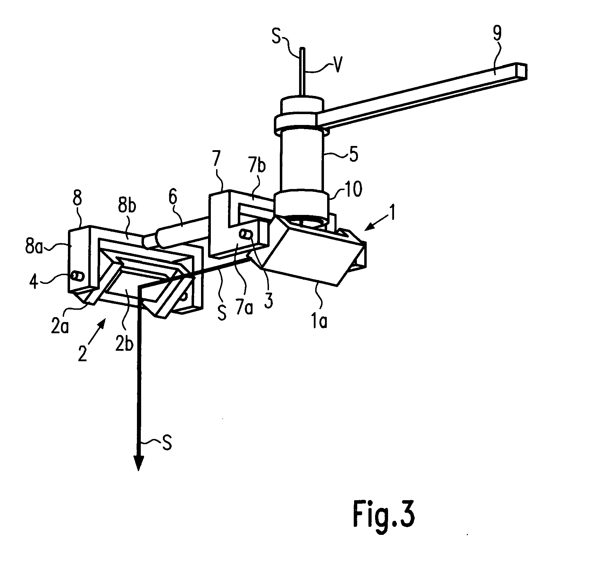

Die Einrichtung umfasst zwei Schwenkspiegel 1, 2 mit jeweils einem Spiegelträger 1a, 2a, an denen die eigentlichen Spiegel angebracht sind, wie in Fig. 3 anhand des Spiegels 2b dargestellt. Der an dem Spiegelträger 1 a angebrachte Spiegel wird von diesem verdeckt und ist nicht gezeigt. Die beiden Schwenkspiegel 1, 2 sind an Tragarmen 7a, 8a jeweils einer Aufhängung 7, 8 drehbeweglich gelagert, so dass die beiden Schwenkspiegel 1, 2 eine Kippbewegung um die Schwenkachsen 3, 4 ausführen können.

Die Schwenkspiegel 1, 2 weisen Stellantriebe auf, die in den Figuren nicht gezeigt sind und beispielsweise an sich bekannte piezoelektrische Aktoren umfassen.

Die Aufhängungen 7, 8 weisen jeweils Verbindungsarme 7b, 8b auf, die die Tragarme 7a, 8a verbinden (siehe Fig. 3). An einer der beiden Aufhängungen 7, 8 ist ein erstes Stellelement 5 befestigt, das zur Durchführung einer rotativen Bewegung um die vertikale Achse V und zur Durchführung einer linearen Bewegung entlang der vertikalen Achse V angepasst ist.

Die vertikale Achse V ist eine gedachte Achse, die mit dem Abschnitt des Laserstrahles S koinzidiert, der auf den an der Aufhängung 7 angebrachten Schwenkspiegel 1 gerichtet ist, die mit dem ersten Stellelement 5 verbunden ist.

Zur Erzeugung der Drehbewegung der Spiegelanordnung um die vertikale Achse V ist das erste Stellelement 5 mit einem Drehhebel 9 verbunden. Die lineare Bewegung der Spiegelanordnung entlang der vertikalen Achse V wird durch einen linear verschieblichen Ring 10 realisiert, der entlang der vertikalen Achse V verfahren werden kann und an dem die Aufhängung 7 des Schwenkspiegels 1 befestigt ist.

Das erste Stellelement 5 ist als Hohlzylinder ausgebildet, durch den der Laserstrahl S passiert, wobei der eine der beiden Schwenkspiegel 1 unterhalb der Öffnung des hohlzylindrischen ersten Stellelementes 5 angeordnet ist. Dazu sind die Tragarme 7a der am ersten Stellelement 5 angebrachten Aufhängung 7 winkelförmig ausgebildet, wobei ein Ende der winkelförmigen Tragarme 7a mit der Schwenkachse 3 des Schwenkspiegels 1 und das andere Ende der Tragarme 7a mit dem Verbindungsarm 7b verbunden sind. Die Länge des mit der Schwenkachse 3 verbundenen Schenkels des Tragarmes 7a ist so bemessen, dass die Mittelachse des hohlzylindrischen Stellelementes 5 in etwa die Schwenkachse 3 des Schwenkspiegels 1 schneidet, und zwar unter einem Winkel von etwa 90°. Die Mittelachse des hohlzylindrischen Stellelementes 5 fällt mit dem Laserstrahl S, bzw. mit der vertikalen Achse V zusammen.

Die Schwenkachsen 3, 4 sind in Parallelstellung angeordnet. Durch Kippen der Schwenkspiegel 1, 2 um die Schwenkachsen 3, 4 sind die Winkelstellungen der Schwenkspiegel 1, 2 kontinuierlich veränderbar. Die Stellantriebe, die diese Kippbewegung bewirken, sind nicht gezeigt.

Die mechanische Verbindung zwischen den Schwenkspiegeln 1, 2 erfolgt durch zweites Stellelement 6, das mit seinen Enden an den Verbindungsarmen 7b, 8b der Aufhängungen 7, 8 befestigt ist. Das zweite Stellelement 6 ist als Stellzylinder ausgeführt, der in horizontaler Lage angeordnet ist und die Schwenkspiegel 1, 2 in horizontaler Gegenüberstellung hält. Der Abstand zwischen den Schwenkspiegeln 1, 2 ist durch eine horizontale, lineare Stellbewegung des zweiten Stellelementes 6 einstellbar.

Die Stellelemente 5, 6 sind angetrieben und gesteuert, wobei die Antriebe bzw. die Steuerung nicht gezeigt sind.

Das erfindungsgemäße Ausführungsbeispiel umfasst also eine Spiegelanordnung aus zwei Schwenkspiegel 1, 2, die mechanisch verbunden sind, wobei die Spiegelanordnung, d.h. beide Schwenkspiegel 1, 2 um die vertikale Achse V drehbar ist. Dabei liegt der Drehmittelpunkt in etwa in der Mitte des einen Schwenkspiegels 1, wobei der andere Schwenkspiegel 2 mit einem bestimmten Abstand von dem einen Schwenkspiegel 1 und synchron mit diesem um die vertikale Achse V rotiert. Außerdem können beide Schwenkspiegel 1, 2 zum Fokussieren des Laserstrahles entlang der vertikalen Achse V, d.h. in y-Richtung (Fig. 2), verfahren werden, wobei die Bewegung aufgrund der mechanischen Verbindung der beiden Schwenkspiegel 1, 2 ebenfalls synchronisiert ist. Durch Veränderung des Abstandes zwischen den beiden Schwenkspiegel 1, 2 kann der Drehradius eingestellt werden, wobei der radial äußere Schwenkspiegel 2 in x-Richtung (Fig. 2) verfahren wird. Alle Spiegelbewegungen können zur Strahlführung kombiniert werden.

Die Einrichtung kann mehr als zwei Spiegel sowie weitere optische Systeme aufweisen.

Im Betrieb der in den Fig. 2, 3 gezeigten Einrichtung wird der aus einer nicht gezeigten Laserquelle emittierte Laserstrahl S durch das hohlzylindrische erste Stellelement 5 geführt und trifft auf den darunter angeordneten Schwenkspiegel 1. Aufgrund der Winkelstellung des Schwenkspiegels 1 wird der Strahl S auf den nachgeordneten Schwenkspiegel 2 umgelenkt. Der Laserstrahl tritt frei aus dem nachgeordneten Schwenkspiegel 2 aus und trifft in Abhängigkeit von der Winkelstellung des nachgeordneten Schwenkspiegels 2 senkrecht oder schräg auf ein zu bearbeitendes Werkstück auf.

Durch Drehung des mit der Aufhängung 7 verbundenen hohlzylindrischen Stellelementes 5 wird das gesamte Spiegelsystem in eine Drehbewegung versetzt, wobei der Radius der Drehung hauptsächlich vom Abstand zwischen den beiden Schwenkspiegeln 1, 2 bestimmt wird. Durch Ein- bzw. Ausfahren des Stellzylinders 6 kann der Abstand zwischen den beiden Schwenkspiegeln 1, 2 und somit der Radius der Drehbewegung verändert werden.

Wie in den Fig. 2, 3 gezeigt, wird die Drehbewegung um die vertikale Achse V durch das hohlzylindrische Stellelement 5 in Verbindung mit dem Drehhebel 9 und somit unabhängig von der Winkelstellung bzw. der Steuerbewegung der Schwenkspiegel 1, 2 erzeugt.

Dadurch ist es möglich, die Auftreffrichtung des Laserstrahles S bezogen auf das Werkstück unabhängig von der Drehbewegung einzustellen, so dass sowohl exakt rechtwinklige Bohrungen (mit senkrecht eingestelltem Laserstrahl S), als auch Fasen (mit schräg eingestelltem Laserstrahl S) erzeugt werden können. Auf diese Weise ist der Nachbearbeitung von Bohrungskanten, insbesondere die Anformung von Fasen möglich.

Außerdem kann der nachgeordnete Schwenkspiegel 2 während der Drehbewegung des Schwenkspiegels 2 um die Vertikalachse V kontinuierlich verändert werden, wodurch eine Verrundung der Kante, d.h. eine Radiusanformung erzeugt werden kann.

Durch die Bewegbarkeit des Ringes 10, an dem der Verbindungsarm 7b der Aufhängung 7 befestigt ist, entlang der vertikalen Achse V, ist die Möglichkeit gegeben, die Fokuslage des Laserstrahles zu verändern. Dabei wird sowohl der unterhalb des hohlzylindrischen Stellelementes 5 angeordnete Schwenkspiegel 1 als auch der mit diesem Schwenkspiegel 1 verbundene nachgeordnete Schwenkspiegel 2 höhenverstellt, wodurch es zu einer entsprechenden Höhenverstellung des Laserbrennfleckes kommt. Auf diese Weise kann der Laserstrahl auf jede Stelle im Arbeitsbereich optimal fokussiert werden. Überdies kann die Fokuslage bei der Bearbeitung eines räumlichen Werkstücks dreidimensional nachgeführt werden.

Die in den Fig. 2, 3 dargestellte Einrichtung zur Führen eines Laserstahles kann zur Bearbeitung von Kunststoffformteilen, insbesondere im Bereich der Automobilindustrie verwendet werden. Die Einrichtung ist besonders geeignet zur Nachbearbeitung von Bohrungskanten in diesen Kunststoffformteilen, d.h. zur Radiusanformung, also zur Verrundung der Bohrungskanten.

## Patentansprüche

1. Einrichtung zur Führung eines Strahles, insbesondere eines Laserstrahles, mit wenigstens zwei Schwenkspiegeln (1, 2), die zur Umlenkung des Strahles angeordnet sind, **dadurch gekennzeichnet, dass** die wenigstens zwei Schwenkspiegel (1, 2) um eine vertikale Achse V drehbar angeordnet sind.

2. Einrichtung nach Anspruch 1, **dadurch gekennzeichnet, dass** die wenigstens zwei Schwenkspiegel (1, 2) entlang der vertikalen Achse V bewegbar sind.

3. Einrichtung nach Anspruch 1 oder 2, **dadurch gekennzeichnet, dass** der Abstand zwischen den wenigstens zwei Schwenkspiegeln (1, 2) veränderbar ist.

4. Einrichtung nach wenigstens einem der Ansprüche 1 bis 3, **dadurch gekennzeichnet, dass** die wenigstens zwei Schwenkspiegel (1, 2) in horizontaler Gegenüberstellung angeordnet sind.

5. Einrichtung nach wenigstens einem der Ansprüche 1 bis 4, **dadurch gekennzeichnet, dass** die Schwenkachse (3) eines der wenigstens zwei Schwenkspiegel (1, 2) die vertikale Achse V unter einem Winkel von 90° schneidet.

6. Einrichtung nach wenigstens einem der Ansprüche 1 bis 5, **dadurch gekennzeichnet, dass** die Schwenkachsen (3, 4) der wenigstens zwei Schwenkspiegel (1, 2) parallel angeordnet sind.

7. Einrichtung nach wenigstens einem der Ansprüche 1 bis 6, **dadurch gekennzeichnet, dass** die Winkelstellungen der wenigstens zwei Schwenkspiegel (1, 2) veränderbar, insbesondere kontinuierlich veränderbar sind.

8. Einrichtung nach wenigstens einem der Ansprüche 1 bis 7, **dadurch gekennzeichnet, dass** die wenigstens zwei Schwenkspiegel (1, 2) mechanisch verbunden sind.

9. Einrichtung nach wenigstens einem der Ansprüche 1 bis 8, **dadurch gekennzeichnet, dass** einer der wenigstens zwei Schwenkspiegel (1, 2) mit einem ersten Stellelement (5) zur Erzeugung einer Drehbewegung um die vertikale Achse (V) verbunden ist.

10. Einrichtung nach Anspruch 9, **dadurch gekennzeichnet, dass** das erste Stellelement (5) zur Erzeugung einer linearen Bewegung entlang der vertikalen Achse V vorgesehen ist.

11. Einrichtung nach Anspruch 9 oder 10, **dadurch gekennzeichnet, dass** die wenigstens zwei Schwenkspiegel (1, 2) durch ein zweites Stellelement zur Erzeugung einer linearen Bewegung verbunden sind.

12. Vorrichtung zur optischen Bearbeitung, insbesondere zur Laserbearbeitung, mit einer Einrichtung zur Führung eines Strahles nach wenigstens einem der Ansprüche 1 bis 11.

13. Verfahren zum Führen eines Strahles, insbesondere eines Laserstrahles, bei dem wenigstens zwei zur Umlenkung des Strahles vorgesehene Schwenkspiegel (1, 2) um eine vertikale Achse V gedreht werden.

14. Verfahren nach Anspruch 13, **dadurch gekennzeichnet, dass** die Winkelstellung des von der vertikalen Achse V entfernter angeordneten Schwenkspiegels (2) kontinuierlich verändert wird.
